# EUROPEAN PATENT SPECIFICATION

(11) **EP 0 949 028 B1**
(45) Date of publication and mention of the grant of the patent: **11.07.2007**
(21) Application number: 99106179.7
(22) Date of filing: 08.04.1999
(51) Int. Cl.: B22F 7/00, H01M 4/80

(54) **High strength spongy sintered metal composite sheet and production method thereof**
Hochfeste, gesinterte, poröse metallische Verbundplatte und Verfahren zur Herstellung davon
Plaque composite à haute résistance en éponge métallique frittée et procédé de fabrication de ce produit

(30) Priority: 08.04.1998 JP 9587098; 24.02.1999 JP 4656499
(43) Date of publication of application: 13.10.1999
(73) Proprietor: MITSUBISHI MATERIALS CORPORATION, Chiyoda-ku, Tokyo (JP)
(72) Inventor: Wada, Masahiro, 1-297 Kitabukuro-cho, Omiya-shi, Saitama (JP); Mayuzumi, Yoshitaka, 1-297 Kitabukuro-cho, Omiya-shi, Saitama (JP); Hoshino, Koji, 1-297 Kitabukuro-cho, Omiya-shi, Saitama (JP); Wakita, Saburou, 1-297 Kitabukuro-cho, Omiya-shi, Saitama (JP)
(74) Representative: Gille Hrabal Struck Neidlein Prop Roos

(56) References cited:
- EP-A- 0 803 923
- DE-A- 4 101 630
- DE-A- 4 426 627
- GB-A- 2 176 500
- US-A- 4 251 603
- US-A- 5 589 301
- US-A- 5 722 134

## Description

### BACKGROUND OF THE INVENTION

### 1. Field of the Invention

The present invention relates to a high strength spongy baked metal composite sheet and a production method thereof. The high strength spongy baked metal composite sheet is used as a material for producing a filter for the high temperature use, a filter for an air cleaner, and an electrode substrate of an alkaline secondary battery. In particular, it can be used as a material for producing an electrode substrate of an alkaline secondary battery.

### 2. Description of the Related Art

In general, as an electrode substrate of an alkaline secondary battery, a spongy baked metal sheet having holes opened at the surface, continuous with internal holes (hereinafter referred to as continuous holes) with a 70 to by volume porosity is used. Furthermore, recently, a spongy baked metal sheet with a structure including a skeleton part comprising a baked sintered metal having continuous holes and continuous holes extremely fine compared with the continuous holes (hereinafter referred to as skeleton fine holes) is used as an electrode substrate of an alkaline secondary battery. It is preferable that the continuous holes have a 100 to 700 µm average hole size, the skeleton part have a 0.5 to 20 µm average skeleton fine hole size and a 10 to 55% porosity, and the spongy baked metal sheet as a whole has a 90 to 99% porosity.

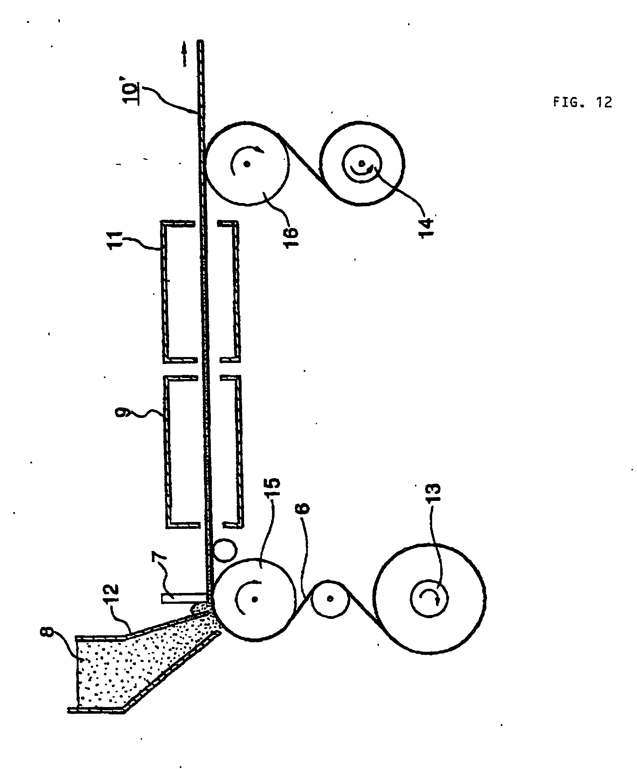

For the production of the spongy baked metal sheet, in general, an apparatus shown in the cross-sectional diagram for explanation of FIG. 12 is used. In FIG. 12, numeral 6 denotes a carrier sheet, 7 a doctor blade, 8 a foaming slurry, 9 a high temperature high humidity vessel, 11 a drying vessel, 12 a hopper, 13 an unwinding reel, 14 a winding reel, and 15, 16 supporting rolls.

The foaming slurry 8 prepared by adding a surfactant and a foaming agent to a slurry made from material powders and a thinner is stored in the hopper 12. As shown in FIG. 12, the foaming slurry 8 is formed as a thin sheet on the carrier sheet 6 by the doctor blade 7. It is foamed like a sponge by utilizing the vapor pressure of a volatile organic solvent and the foamability of the surfactant contained in the above-mentioned foaming slurry in the high temperature high humidity vessel 9. It is further dried in the drying vessel 11 so as to produce a spongy green sheet 10'. The spongy green sheet 10' is degreased and baked in a degreasing device and a baking furnace (not illustrated) so as to produce a spongy baked metal sheet having continuous holes.

In order to strengthen the spongy baked metal sheet accordingly produced, in general, a reinforcing layer is formed by integrating a metal layer having ordinary punching holes, a metal mesh, or a plurality of fine metal layers by resistance welding.

A similar solution is disclosed in US-A-5589301 or US-A-5722134.

However, for integrating the spongy baked metal sheet with the metal tape having the punching holes or the metal mesh by resistance welding, at least the two steps including a production step of the spongy baked metal sheet and a step of the resistance welding of the spongy baked metal sheet and the metal tape, the metal mesh, or the like, are needed so as to increase the production cost, and thus it is not preferable. Moreover, a problem is involved in that at the time of the resistance welding of the spongy baked metal sheet and the metal tape, the metal mesh, or the like, the holes of the spongy baked metal sheet are crushed by an electrode roll so that the porosity of the spongy baked metal sheet is lowered.

Moreover, a method of producing a high strength spongy baked metal composite sheet by forming the foaming slurry as a thin sheet on the metal tape having punching holes or the metal mesh by the doctor blade method, preparing a spongy green sheet having continuous holes by foaming the foaming slurry by utilizing the vapor pressure of a volatile organic solvent and the foamability of the surfactant contained therein in the constant temperature high humidity vessel,and degreasing and sintering the spongy green sheet so as to laminate a spongy baked metal sheet having continuous holes on the metal tape having the punching holes or the metal mesh, is conceivable. However, a high strength spongy baked metal composite sheet produced by this method involves a problem in that the contraction ratio of the spongy green sheet at the time of degreasing and sintering is drastically large compared with the contraction ratio of the metal tape or the metal mesh so that the sheet is curved toward the spongy baked metal layer side or cracks are generated in the spongy baked metal layer.

Furthermore, when it is used as an electrode substrate of an alkaline secondary battery, the spongy baked metal layer of a high strength spongy baked metal composite sheet is impregnated with an active material and is rolled with a roll. At the time, the joint between the spongy baked metal layer and the metal tape can be insufficient so as to cause peel-off between the spongy baked metal layer and the metal tape. Furthermore, sponge like porous structures are disclosed in US-A-4251603 and EP-A-803923. ln DE-A 4101630 and DE-A-4426627 metal foams are laminated with metal sheets

### SUMMARY OF THE INVENTION

The features of the present invention are disclosed in the produce claim 1. Method claim 12 discloses the production step features.

As a result of the study by the present inventors for solving the above-mentioned problems, the below-mentioned knowledge was obtained. That is, by degreasing and sintering a composite green sheet comprising a dense reinforcing green layer and a spongy green layer produced by extending a slurry comprising a mixture of material powders and a thinner, or a mixture of material powders, a thinner and a surfactant on a carrier sheet by the doctor blade method, heating and drying the same for forming a green layer to be a baked metal dense reinforcing layer (hereinafter referred to as a dense reinforcing green layer), extending a slurry prepared by mixing material powders, a thinner, a surfactant and a foaming agent (hereinafter referred to as a foaming slurry) on the dense reinforcing green layer by the doctor blade method, and heating and drying the same for forming a green layer to be a spongy baked metal layer (hereinafter referred to as a spongy green layer) on the above-mentioned dense reinforcing green layer,
a high strength spongy baked metal composite sheet comprising a spongy baked metal layer with a high porosity, having continuous holes opened on the surface, continuous with internal holes (hereinafter referred to as continuous holes), and a baked metal dense reinforcing layer having a porosity smaller than the porosity of the spongy baked metal layer, denser than the spongy baked metal layer and with a higher strength laminated thereon, can be obtained. The spongy baked metal composite sheet cannot be curved in the degreasing and sintering step nor generate cracks in the spongy baked metal layer. Moreover, a spongy baked metal composite sheet with a high strength and a high porosity can be obtained with one time degreasing and sintering. Furthermore, the risk of the peel-off in producing an electrode substrate of an alkaline secondary battery can be prevented.

The present invention has been accomplished based on the above-mentioned knowledge. That is, a first aspect of the present invention is a high strength spongy baked metal composite sheet comprising a spongy baked metal layer having continuous holes with a high porosity, and a high strength baked metal dense reinforcing layer having a porosity smaller than the porosity of the spongy baked metal layer, laminated thereon.

It is preferable that the baked metal dense reinforcing layer comprising a high strengths spongy baked metal composite sheet of the present invention has a 0.5 to 30% thickness (preferably 1 to 5%) with respect to the thickness of the entire high strength spongy baked metal composite sheet. If the thickness of the baked metal dense reinforcing layer is less than 0.5%, a sufficient strength cannot be obtained since the thickness of the baked metal dense reinforcing layer is too thin. On the other hand, if the thickness of the baked metal dense reinforcing layer is more than 30%, even if a sufficient strength can be obtained, in the case it is used as an electrode substrate for an alkaline secondary battery, an active material cannot be filled sufficiently, and thus it is not preferable. Accordingly, the thickness of a baked metal dense reinforcing layer of the present invention was set as a 0.5 to 30% (preferably 1 to 5%) thickness with respect to the thickness of the entire high strength spongy baked metal composite sheet.

Accordingly, a second aspect of the present invention is a high strength spongy baked metal composite sheet comprising a spongy baked metal layer having continuous holes with a high porosity, and a high strength baked metal dense reinforcing layer having a porosity smaller than the porosity of the spongy baked metal layer, laminated thereon, wherein the baked metal dense reinforcing layer has a 0.5 to 30% thickness with respect to the entire high strength spongy baked metal composite sheet.

Furthermore, although a spongy baked metal layer with a high porosity, having continuous holes, comprising a high strength spongy baked metal composite sheet of the present invention has a 70 to 99% by volume porosity, which is the same as the porosity of an ordinary spongy baked metal layer, since the baked metal dense reinforcing layer comprising the high strength spongy baked metal composite sheet of the present invention has continuous holes further smaller than the above-mentioned continuous holes opened on the surface and continuous with internal holes (hereinafter referred to as continuous fine holes), and a porosity smaller than the porosity of the spongy baked metal layer, a high strength and a high electric conductivity can be provided.

The baked metal dense reinforcing layer has a 4 to 55% by volume (preferably 20 to 40% by volume) porosity. By providing punching holes in a high strength spongy baked metal composite sheet of the prevent invention, a further dense baked metal dense reinforcing layer with a less than 4% by volume porosity can be formed. Furthermore, a baked metal dense reinforcing layer with a 0% by volume porosity without holes can be formed. Even if a baked metal dense reinforcing layer with a less than 4% by volume porosity or without holes is laminated on a spongy baked metal layer by baking, the shrinkage during the baking step is not much different from shrinkage in baking the spongy baking metal layer, and thus there is no risk of curvature or generation of cracks in the spongy baked metal layer.

Accordingly, a third aspect of the present invention is a high strength spongy baked metal composite sheet comprising a spongy baked metal layer having continuous holes with a high porosity, and a baked metal dense reinforcing layer having a 4 to 55% by volume (0 inclusive) porosity smaller than the porosity of the spongy baked metal layer, laminated thereon.

A fourth aspect of the present invention is a high strength spongy baked metal composite sheet comprising a spongy baked metal layer having continuous holes with a high porosity, and a high strength baked metal dense reinforcing layer having a 4 to 55% by volume porosity smaller than the porosity of the spongy baked metal layer, laminated thereon, wherein the baked metal dense reinforcing layer has a 0.5 to 30% thickness with respect to the entire high strength spongy baked metal composite sheet.

A fifth aspect of the present invention is a high strength spongy baked metal composite sheet comprising a spongy baked metal layer having continuous holes with a high porosity, and a high strength baked metal dense reinforcing layer having continuous fine holes with a 4 to 55% by volume porosity smaller than the porosity of the spongy baked metal layer, laminated thereon.

A sixth aspect of the present invention is a high strength spongy baked metal composite sheet comprising a spongy baked metal layer having continuous holes with a high porosity, and a high strength baked metal dense reinforcing layer having continuous fine holes with a 4 to 55% by volume porosity smaller than the porosity of the spongy baked metal layer, laminated thereon, wherein the baked metal dense reinforcing layer has a 0.5 to 30% thickness with respect to the entire high strength spongy baked metal composite sheet.

A seventh aspect of the present invention is a high strength spongy baked metal composite sheet comprising a spongy baked metal layer having continuous holes with a high porosity, and a high strength baked metal dense reinforcing layer having a less than 4% by volume porosity or without holes, laminated thereon.

An eighth aspect of the present invention is a high strength spongy baked metal composite sheet comprising a spongy baked metal layer having continuous holes with a high porosity, and a high strength baked metal dense reinforcing layer having a less than 4% by volume porosity or without holes, laminated thereon, wherein the baked metal dense reinforcing layer has a 0.5 to 30% thickness with respect to the entire high strength spongy baked metal composite sheet.

Furthermore, since the baked metal dense reinforcing layer is produced without having a step with a large draft, such as rolling, the continuous fine holes contained in the baked metal dense reinforcing layer can be distributed three-dimensionally and homogeneously without being crushed in the thickness direction. Accordingly, since the baked metal dense reinforcing layer has the isotropic mechanical strength and the electrically conductive characteristic, a high strength and a high electric conductivity can also be provided with respect to the thickness direction.

Accordingly, a ninth aspect of the present invention is a high strength spongy baked metal composite sheet, wherein the baked metal dense reinforcing layer has homogeneously distributed three-dimensionally amorphous holes to be observed by an electron microscope with a 1,000 times magnification.

A high strength spongy baked metal composite sheet according to the present invention, with a high strength baked metal dense reinforcing layer laminated, will be explained in further detail with reference to the accompanied drawings.

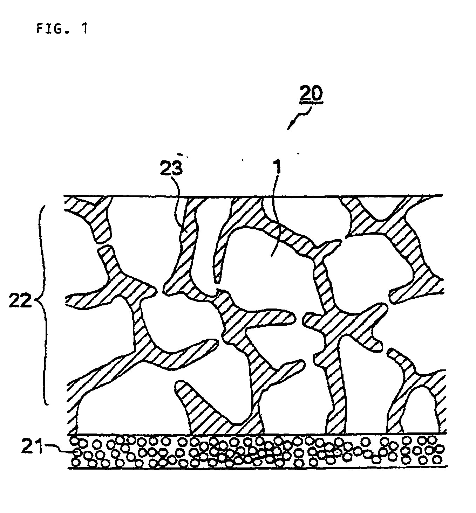

FIG. 1 is a cross-sectional enlarged diagram of a high strength spongy baked metal composite sheet 20 according to the present invention, comprising a spongy baked metal layer 22 having continuous holes 1 with a high porosity laminated on one side of a baked metal dense reinforcing layer 21 having a 4 to 55% by volume porosity.

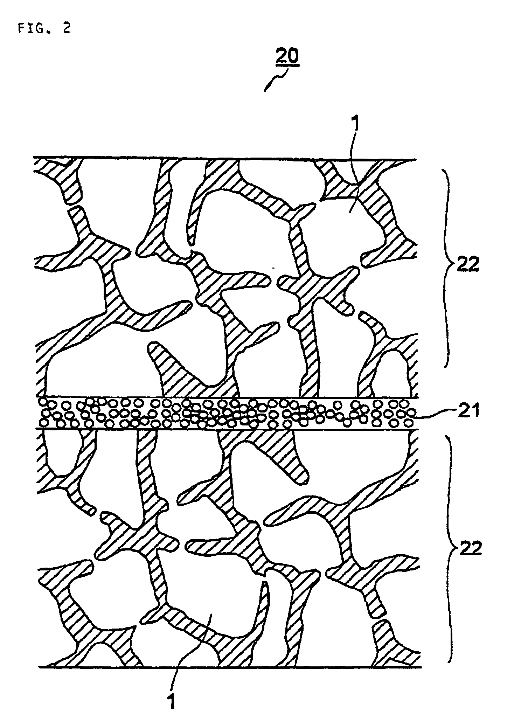

FIG. 2 is a cross-sectional enlarged diagram of a high strength spongy baked metal composite sheet 20 according to the present invention, comprising a spongy baked metal layer 22 having continuous holes 1 with a high porosity laminated on both sides of a baked metal dense reinforcing layer 21 having a 4 to 55% by volume porosity.

The spongy baked metal layer 22, in general, comprises continuous holes 1 and a skeleton part 23 with a 70 to 99% porosity, which is a known value. In laminating the above-mentioned high strength baked metal dense reinforcing layer having a 4 to 55% by volume porosity on the spongy baked metal layer 22, the spongy baked metal layer 22 is laminated on one side or both sides of the baked metal dense reinforcing layer 21. In the high strength spongy baked metal composite sheets 20 according to the present invention comprising the above-mentioned baked metal dense reinforcing layer 21 and the above-mentioned known spongy baked metal layer 22 shown in FIGS. 1 and 2, the baked metal dense reinforcing layer 21 has a 0.5 to 30% thickness with respect to the thickness of the entire high strength spongy baked metal composite sheet 20 in either case.

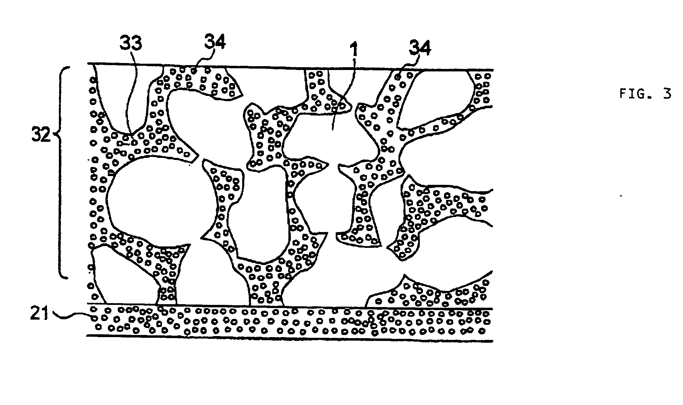

FIG. 3 is a cross-sectional enlarged diagram of a high strength spongy baked metal composite sheet 20 according to the present invention, comprising a spongy baked metal layer 32 having continuous holes 1 with a high porosity laminated on one side of a baked metal dense reinforcing layer 21 having a 4 to 55% by volume porosity.

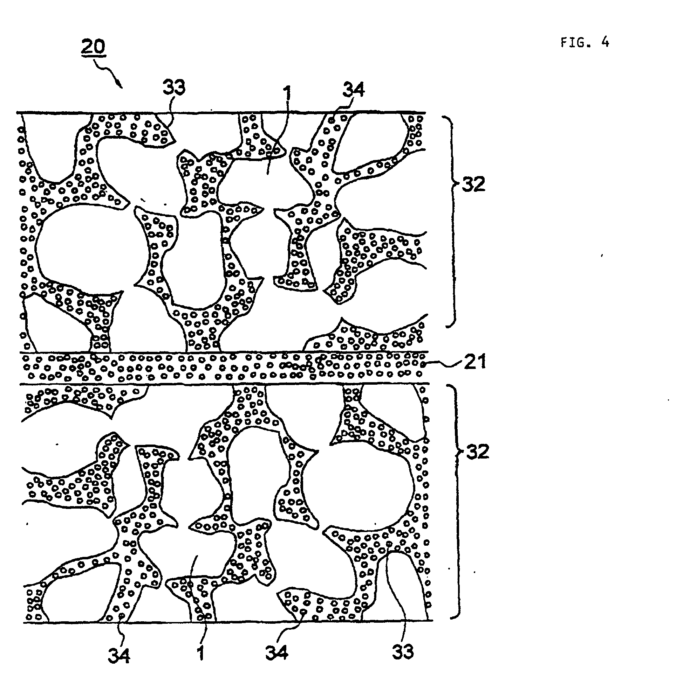

FIG. 4 is a cross-sectional enlarged diagram of a high strength spongy baked metal composite sheet 20 according to the present invention, comprising a spongy baked metal layer 32 having continuous holes 1 with a high porosity laminated on both sides of a baked metal dense reinforcing layer 21 having a 4 to 55% by volume porosity.

The spongy baked metal layer 32 having continuous holes 1 with a high porosity to be laminated on one side or both sides of the baked metal dense reinforcing layer 21 shown in FIGS. 3 and 4 comprises continuous holes 1 and a skeleton part 33. The skeleton part 33 includes skeleton fine holes 34, with a 70 to 99% entire porosity. The high porosity spongy baked metal layer is known commonly. It is also known that the above-mentioned continuous holes 1 have a 100 to 700 µm average hole size, the skeleton fine holes 34 of the skeleton part 33 have a 0.5 to 20 µm average hole size with a 50 to 55% porosity, and the entirety of the spongy baked metal layer 32 has a 90 to 98% porosity. In the high strength spongy baked metal composite sheets 20 according to the present invention comprising the above-mentioned baked metal dense reinforcing layer 21 and the above-mentioned known spongy baked metal layer 22 shown in FIGS. 3 and 4, the baked metal dense reinforcing layer 21 has a 0.5 to 30% thickness with respect to the thickness of the entire high strength spongy baked metal composite sheet 20 in either case. Moreover, it is preferable that the high strength baked metal dense reinforcing layer 21 with a 4 to 55% by volume porosity has a 1 to 100 µm average hole size.

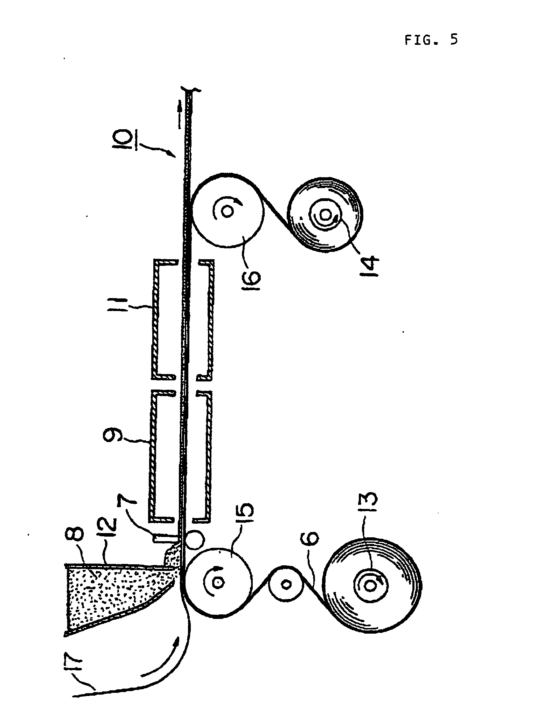

In producing the high strength spongy baked metal composite sheets 20 according to the present invention shown in FIGS. 1 to 4, as shown in FIG. 5, a preliminarily produced dense reinforcing green tape 17 is supplied onto a carrier sheet 6. While supplying a foaming slurry 8 onto the above-mentioned carrier sheet 6 with the dense reinforcing green tape 17 placed thereon, the foaming slurry 8 is applied like a thin sheet on the above-mentioned dense reinforcing green tape 17. It is formed like a sponge in a high temperature high humidity vessel 9, utilizing the vapor pressure of a volatile organic solvent and the foamability of the surfactant contained in the above-mentioned foaming slurry 8. Furthermore, it is dried in a drying vessel 11 so as to produce a composite green sheet 10 comprising a dense reinforcing green layer and a spongy green layer. By degreasing and sintering the composite green sheet 10 while passing through a degreasing furnace and a sintering furnace (not illustrated), a high strength spongy baked metal composite sheet 20 according to the present invention can be produced.

In FIG. 5, numeral 7 denotes a doctor blade, 9 a high temperature high humidity vessel, 11 a drying vessel, 12 a hopper, 13 an unwinding reel, 14 a winding reel, and 15, 16 supporting rolls. Since the numerals are the same as those of FIG. 12, the function thereof will not be explained here. By degreasing and sintering the composite green sheet comprising the dense reinforcing green layer and the spongy green layer, the high strength spongy baked metal composite sheet 20 according to the present invention comprising the spongy baked metal layer 22 and the high strength baked metal dense reinforcing layer 21 with a 4 to 55% by volume porosity shown in FIGS. 1 and 3 can be produced.

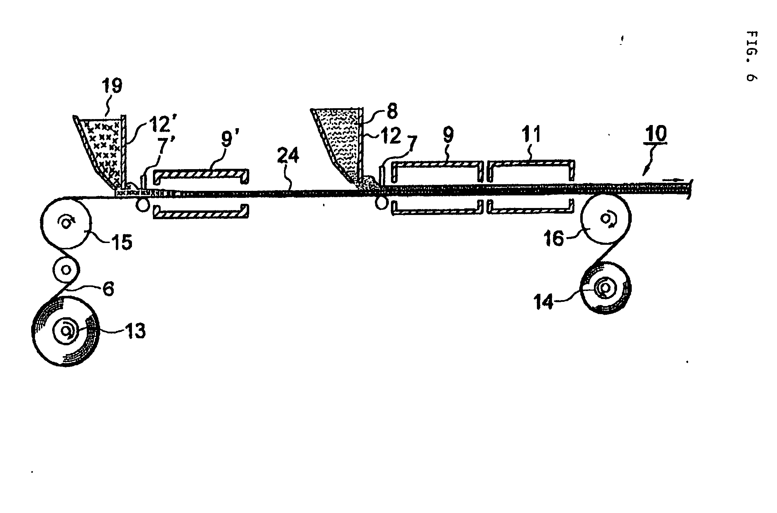

Although the dense reinforcing green tape 17 preliminarily produced is supplied in the case of FIG. 5, the high strength spongy baked metal composite sheet 20 as shown in FIGS. 1 and 3 can be produces also by the method shown in FIG. 6. That is, a dense reinforcing layer forming slurry 19 stored in a hopper 12 is supplied onto a carrier sheet 6. Then, a dense reinforcing slurry layer 24 is formed on the carrier sheet 6 by extending the dense reinforcing layer forming slurry thinly by a doctor blade 7'. By passing the dense reinforcing slurry layer 24 through a constant temperature high humidity vessel 9', the surface is lightly greened. Then, by supplying a foaming slurry 8 onto the dense reinforcing slurry layer 24 with the surface lightly greened so as to form a foaming slurry layer and passing it through a high temperature high humidity vessel 9 and a drying vessel 11, a composite green sheet 10 comprising a dense reinforcing green layer and a spongy green layer is produced. Then, the composite green sheet passes through a degreasing furnace and a sintering furnace (not illustrated) for degreasing and sintering. The above-mentioned high temperature high humidity vessel 9' is provided for lightly greening the surface of the dense reinforcing slurry layer 24 so as not to mix the dense reinforcing layer forming slurry 19 and the foaming slurry 8 in the production of the composite green sheet.

Furthermore, the present invention is a high strength spongy baked metal composite sheet with a high strength baked metal dense reinforcing layer having a less than 4% by volume porosity or without holes laminated. Since the high strength baked metal dense reinforcing layer having a less than 4% by volume porosity or without holes does not have a sufficient ventilation, a baked metal dense reinforcing layer with a plurality of punching holes, a mesh-like baked metal dense reinforcing layer, or baked metal dense reinforcing layers arranged parallel with each other with an interval needs to be laminated.

A high strength spongy baked metal composite sheet with a high strength baked metal dense reinforcing layer having a less than 4% by volume porosity or without holes according to the present invention will be explained in detail with reference to the accompanied drawings.

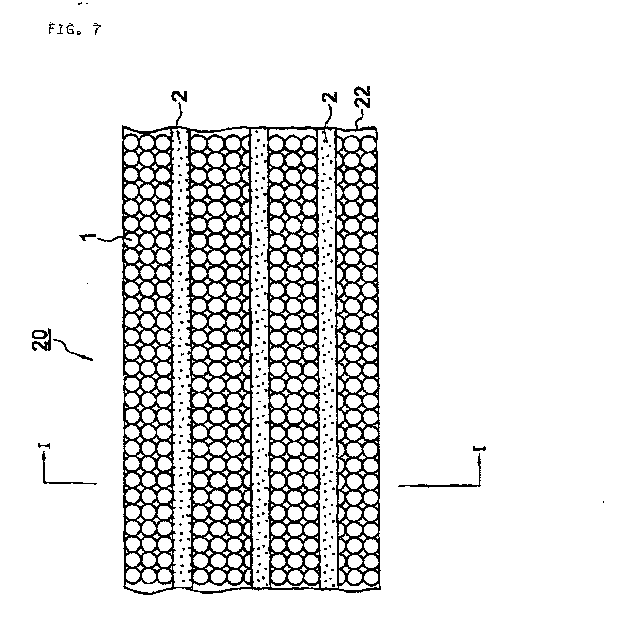

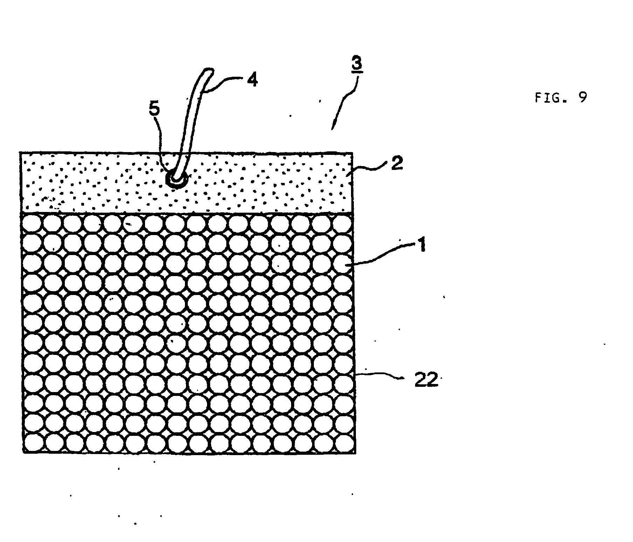

FIG. 7 is a plan diagram for explaining a high strength spongy baked metal composite sheet 20 with high strength baked metal dense reinforcing layers with a less than 4% by volume porosity or without holes according to the present invention, and FIG. 8 is a cross-sectional view taken on the line I-I of FIG. 7. In FIGS. 7 and 8, numeral 1 denotes continuous holes and 2 high strength baked metal dense reinforcing layers with a less than 4% porosity or without holes. As shown in FIGS. 7 and 8, in the high strength spongy baked metal composite sheet 20 having the baked metal dense reinforcing layers 2, narrow band-like baked metal dense reinforcing layers 2 are formed with an interval on one side of the spongy baked metal layer 22 in the direction parallel with the longitudinal direction of the spongy baked metal layer 22. The high strength spongy baked metal composite sheet 20 having the baked metal dense reinforcing layers 2 shown in FIGS. 7 and 8 can be cut into a certain shape so as to be used as a filter for the high temperature use or a filter for an air cleaner as it is.

Moreover, as shown in FIG. 9, an electrode substrate 3 of an alkaline secondary battery can be produced by cutting the high strength spongy baked metal composite sheet 20 shown in FIGS. 7 and 8 such that a part having the baked metal dense reinforcing layer 2 and a part having the continuous holes are paired. As shown in FIG. 9, since the baked metal dense reinforcing layer 2 exists, the continuous holes 1 are not crushed even if a collector tab 4 is connected to the baked metal dense reinforcing layer 2 by welding 5, and thus the ratio occupied by the continuous holes 1 cannot be reduced and the amount of the active material contained in the entire electrode cannot be reduced by welding the collector tab.

As the baked metal dense reinforcing layer 2 to be formed on one side of the high strength spongy baked metal composite sheet 20 according to the present invention, the narrow band-like baked metal dense reinforcing layers 2 are formed with an interval parallel with each other in the longitudinal direction in the case of FIG. 7, but it can be lattice-like, mesh-like (not illustrated) or another optional shape, and thus it is not limited to the shapes shown in FIGS. 7 to 9.

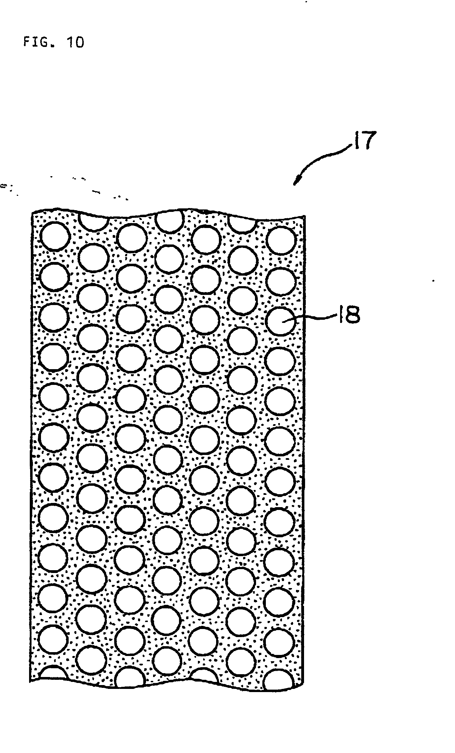

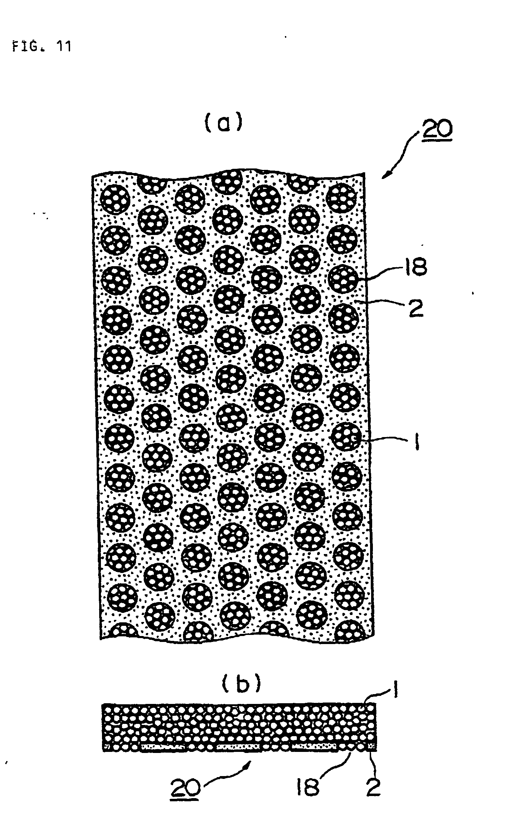

For example, a high strength wide width dense reinforcing green tape 17 having punching holes 18 as shown in FIG. 10 is produced preliminarily. The dense reinforcing green tape 17 having the punching holes 18 is supplied so as to be placed onto a carrier sheet 6 as shown in the cross-sectional diagram for explanation of FIG. 5. While supplying a foaming slurry 8 onto the dense reinforcing green tape 17 having the punching holes 18, the foaming slurry 8 is formed like a thin sheet on the dense reinforcing green tape 17 having the punching holes 18. It is formed like a sponge, utilizing the vapor pressure of a volatile organic solvent and the foamability of the surfactant contained in the above-mentioned foaming slurry 8, followed by drying so as to produce a composite green sheet comprising a dense reinforcing green layer and a spongy green layer. By degreasing and sintering the composite green sheet while passing through a degreasing furnace and a sintering furnace (not illustrated), a high strength spongy baked metal composite sheet 20 having the continuous holes 1, with one side provided with a baked metal dense reinforcing layer 2 having the punching holes 18 according to the present invention as shown in a plan view of FIG. 11A and a cross-sectional view of FIG. 11B can be produced. The high strength spongy baked metal composite sheet 20 accordingly obtained has the continuous holes 1 exposed from the punching holes 18 of the baked metal dense reinforcing layer 2 on the rear side of the high strength spongy baked metal composite sheet 20 as shown in the plan view of FIG. 11A and the cross-sectional view of FIG. 11B.

The high strength spongy baked metal composite sheet according to the present invention is produced by the methods shown in FIGS. 5 and 6. Accordingly, a tenth aspect of the present invention is a production method of a high strength spongy baked metal composite sheet comprising a step of forming a dense reinforced green layer to be a baked metal dense reinforcing layer by extending a slurry comprising a mixture of material powders and a thinner or a mixture comprising material powders, a thinner and a surfactant on a carrier sheet by the doctor blade method, heating and drying,
a step of forming a spongy green layer to be a spongy baked metal layer on the dense reinforced green layer by extending a foaming slurry prepared by mixing material powders, a thinner, a surfactant and a foaming agent on the dense reinforcing green layer by the doctor blade method, heating and drying so as to produce a composite green sheet comprising the dense reinforcing green layer and the spongy green layer, and
a step of degreasing and sintering the composite green sheet.

In order to produce a high strength spongy baked metal composite sheet with spongy baked metal layers having continuous holes with a high porosity laminated on both sides of a baked metal dense reinforcing layer having a 0 to 55% (0 inclusive) by volume porosity, the above-mentioned foaming slurry is further applied on the dense reinforcing green layer of the composite green sheet produced in the above-mentioned tenth aspect by the doctor blade method, followed by drying so as to produce a composite green sheet with the spongy green layers formed on both sides of the dense reinforcing green layer. Then, by degreasing and sintering the composite green sheet, it can be produced.

Accordingly, an eleventh aspect of the present invention is a production method of a high strength spongy baked metal, composite sheet comprising a step of further extending the above-mentioned foaming slurry on the surface of the dense reinforcing green layer side of the composite green sheet produced in the above-mentioned tenth aspect by the doctor blade method, drying so as to produce a composite green sheet with the spongy green layer formed on both sides of the dense reinforcing green layer, degreasing and sintering the composite green sheet.

Moreover, in order to produce a high strength spongy baked metal composite sheet with spongy baked metal layers having continuous holes with a high porosity laminated on both sides of a baked metal dense reinforcing layer having a 0 to 55% (0 inclusive) by volume porosity, a preliminarily produced spongy green layer is superimposed on and joined with the dense reinforcing green layer of the composite green sheet produced in the above-mentioned tenth aspect so as to produce a composite green sheet. Then, by degreasing and sintering the composite green sheet, it can be produced.

Accordingly, a twelfth aspect of the present invention is a production method of a high strength spongy baked metal composite sheet comprising a step of further superimposing and joining a preliminarily produced spongy green layer onto the surface of the dense reinforcing green layer side of the composite green sheet produced in the above-mentioned tenth aspect so as to produce a composite green sheet with the spongy green layer formed on both sides of the dense reinforcing green layer, degreasing and sintering the composite green sheet.

The high strength spongy baked metal composite sheet according to the above-mentioned first to ninth aspects can be used as a material for producing a filter for the high temperature use, a filter for an air cleaner, and an electrode substrate of an alkaline secondary battery. In particular, it is preferably used as a material for producing an electrode substrate of an alkaline secondary battery.

Accordingly, a thirteenth aspect of the present invention is an electrode substrate of an alkaline secondary battery produced with the high strength spongy baked metal composite sheet according to the above-mentioned first to ninth aspects.

As the material powders for producing a high strength spongy baked metal composite sheet according to the present invention, Ni powders, Ni group alloy powders, Cu powders, cu group alloy powders, Fe powders or Fe group alloy powders can be used preferably, but other metal powders can be used as well, and thus it is not limited thereto.

### BRIEF DESCRIPTION OF THE DRAWINGS

FIG. 1 is a cross-sectional enlarged diagram of a high strength spongy baked metal composite sheet.
FIG. 2 is a cross-sectional enlarged diagram of a high strength spongy baked metal composite sheet.
FIG. 3 is a cross-sectional enlarged diagram of a high strength spongy baked metal composite sheet.
FIG. 4 is a cross-sectional enlarged diagram of a high strength spongy baked metal composite sheet.
FIG. 5 is a cross-sectional diagram for explaining a device for producing a composite green sheet having a dense reinforcing green layer to be used in the production of a high strength spongy baked metal composite sheet of the present invention.
FIG. 6 is a cross-sectional diagram for explaining a device for producing a composite green sheet having a dense reinforcing green layer to be used in the production of a high strength spongy baked metal composite sheet of the present invention.
FIG. 7 is a plan schematic diagram of a high strength spongy baked metal composite sheet of the present invention.
FIG. 8 is a cross-sectional view taken on the line I-I of FIG. 7.
FIG. 9 is a plan view of an electrode substrate of an alkaline secondary battery produced with a high strength spongy baked metal composite sheet of the present invention.
FIG. 10 is a plan view of a dense reinforcing green tape having punching holes.
FIG. 11 is a plan schematic diagram of a high strength spongy baked metal composite sheet of the present invention having a baked metal dense reinforcing layer provided with punching holes.
FIG. 12 is a cross-sectional diagram for explaining a device for producing a composite green sheet to be used in the production of a conventional spongy porous metal sheet.

### DESCRIPTION OF THE PREFERRED EMBODIMENTS

### Embodiment 1

With a composition ratio shown in Table 1, a filler and a thinner were mixed and kneaded in a sealed container for 4 hours so as to produce a dense reinforcing layer forming slurry. Then, it was stored in the hopper 12' shown in FIG. 6.

Then, with a composition ratio shown in Table 2, a filler and a thinner were mixed and kneaded in a sealed container for 24 hours. A surfactant was added thereto by the amount shown in Table 2. It was kneaded under a reduced pressure for 15 minutes. A foaming agent was added by the amount shown in Table 2. It was kneaded in the atmospheric pressure for 5 minutes so as to prepare a foaming slurry. The obtained foaming slurry was stored in the hopper 12 shown in FIG. 6.

### Table 1

### Table 2

A dense reinforcing layer forming slurry 19 shown in Table 1 was extended on the carrier sheet 6 of FIG. 6 with a 0.1 mm blade gap so as to form a dense reinforcing slurry layer 24. By passing the slurry layer through the high temperature high humidity vessel 9' for drying at 30°C for 2 minutes, the surface was lightly dried. It was supplied beneath the hopper 12 for storing the foaming slurry 8 shown in Table 2 for applying the foaming slurry 8 with a 0.4 mm blade gap so as to produce a laminated slurry. The laminated slurry was supplied to the high temperature high humidity vessel 9 of FIG. 6 for foaming in a 40°C temperature, 90% humidity and 20 minutes maintenance condition. Then, it was dried with hot air in a 80°C temperature and 15 minutes maintenance condition so as to produce a composite green sheet 10 comprising a dense reinforcing green layer and a spongy green layer.

While passing the composite green sheet through a degreasing furnace (not illustrated), it was degreased in a 500°C air temperature and 15 minutes maintenance condition. Then, it was baked in an N₂-5%H₂ atmosphere in the condition shown in Table 3 while passing it through a sintering furnace (not illustrated) so as to produce high strength spongy baked metal composite sheets 1 to 3, comprising a spongy baked metal layer and a baked metal dense reinforcing layer shown in Table 3 according to the present invention (hereinafter referred to as a composite sheet according to the present invention).

On the composite sheets according to the present invention 1 to 3 accordingly obtained, a part thereof was buried in a resin so as to polish the cross-section for the observation with an optical microscope with a 100 times magnification. Thereby, the porosity of the spongy baked metal layer and the baked metal dense reinforcing layer, and the thickness ratio thereof were measured. Moreover, whether or not curvature is generated, and whether or not cracks are generated in the spongy baked metal layer were observed. Results are shown in Table 3. Furthermore, it was cut into the JIS Z2201 (metal material tensile test piece) No. 13A shape by an electric discharge machine for conducting a tensile test. Moreover, it was cut into a 10 mm width and 200 mm length size for measuring the specific resistance by the four-terminal method. Results are shown in Table 3.

Moreover, a paste-like active material was prepared by adding 1% by weight of carboxy methyl cellulose (CMC), 3% by weight of polytetrafluoroethylene (PTFE) and 30% by weight of pure water to a powdery mixture comprising 92% by weight of nickel hydroxide powders and 8% by weight of cobalt monoxide powders and kneading. The composite sheets according to the present invention 1 to 3 were impregnated with the active material, dried at 100°C for 3 hours, and rolled by 30% with a roll. The cross-section of the composite sheets according to the present invention 1 to 3 after rolling was observed with an optical microscope for the observation on whether or not peel-off of the spongy baked metal layer and the baked metal dense reinforcing layer is generated. Results are shown in Table 3.

### Conventional Example 1

The foaming slurry shown in Table 2 of Embodiment 1 was applied on the surface of an Ni thin sheet with a 60 µm thickness, having punching holes by the doctor blade method so as to produce a conventional composite sheet 1 with a spongy baked metal layer formed on the surface of the Ni thin sheet provided with punching holes in the condition the same as the embodiment 1. The obtained conventional composite sheet 1 was measured and observed similarly as the embodiment 1. Results are shown in Table 3.

### Conventional Example 2

With the foaming slurry shown in Table 2 of Embodiment 1, a spongy baked metal sheet without a dense reinforcing method was produced by the doctor blade method. The obtained sheet was measured and observed similarly as the embodiment 1. Results are shown in Table 3.

### Table 3

From the results shown in Table 3, it was learned that any of the composite sheets according to the present invention 1 to 3 can be used as a material for producing a filter for the high temperature use, a filter for an air cleaner, and an electrode substrate of an alkaline secondary battery. However, the conventional composite sheet 1 was curved to the spongy baked metal layer side and cracks were generated in the spongy baked metal layer by the trial for modifying the curvature. Therefore, it cannot be used as a material for producing a filter for the high temperature use, a filter for an air cleaner, and an electrode substrate of an alkaline secondary battery. Moreover, since the spongy baked metal sheet of the conventional example 2 has a low strength, it cannot be used as a filter for the high temperature use or a filter for an air cleaner. Furthermore, since it has a large specific resistance, a good result was not obtained as an electrode substrate of an alkaline secondary battery.

### Embodiment 2

With a composition ratio shown in Table 4, a filler, a thinner and a surfactant were mixed and kneaded in a sealed container for 4 hours so as to produce a dense reinforcing layer forming slurry. Then, it was stored in the hopper 12 shown in FIG. 6.

Then, with a composition ratio shown in Table 5, a filler and a thinner were mixed and kneaded in a sealed container for 24 hours. A surfactant was added thereto by the amount shown in Table 5. It was kneaded under a reduced pressure for 15 minutes. A foaming agent was added by the amount shown in Table 5. It was kneaded in the atmospheric pressure for 5 minutes so as to prepare a foaming slurry. The obtained foaming slurry was stored in the hopper 12 shown in FIG. 6.

### Table 4

### Table 5

A dense reinforcing layer forming slurry 19 shown in Table 4 was extended on the carrier sheet 6 of FIG. 6 with a blade gap shown in Table 6 so as to form a dense reinforcing slurry layer 24. By passing the slurry layer through the high temperature high humidity vessel 9' for drying at 30°C for 2 minutes, the surface was lightly dried. It was supplied beneath the hopper 12 for storing the foaming slurry 8 shown in Table 6 for applying the foaming slurry 8 with a blade gap shown in Table 6 so as to produce a laminated slurry. The laminated slurry was supplied to the high temperature high humidity vessel 9 of FIG. 6 for foaming in a 40°C temperature, 90% humidity and 20 minutes maintenance condition. Then, it was dried with hot air in a 80°C temperature and 15 minutes maintenance condition so as to produce a composite green sheet 10 comprising a dense reinforcing green layer and a spongy green layer.

By superimposing a preliminarily produced spongy green tape with a 1.5 mm thickness onto the composite green sheet comprising the dense reinforcing green layer and the spongy green layer accordingly obtained on the dense reinforcing green layer side of the composite green sheet, and closely pressed with a roll in a 50°C temperature and 90% humidity atmosphere for joining, a composite green sheet having a spongy green layer on both sides of the dense reinforcing green layer was produced.

While passing the joined composite green sheet through a degreasing furnace (not illustrated), it was degreased in a 500°C air temperature and 15 minutes maintenance condition. Then, it was sintered in an N₂-5%H₂ atmosphere in a 1100°C and 10 minutes maintenance condition while passing it through a sintering furnace (not illustrated) so as to produce composite sheets according to the present invention 1 to 3, comprising a spongy baked metal layer formed on both sides of a baked metal dense reinforcing layer shown in Table 6.

On the composite sheets according to the present invention 4 to 6 accordingly obtained, as in the embodiment 1, the porosity of the spongy baked metal layer and the baked metal dense reinforcing layer, and the thickness ratio thereof were measured. Moreover, whether or not curvature is generated, and whether or not cracks are generated in the spongy baked metal layer were observed. Results are shown in Table 6. Furthermore, it was cut into the JIS Z2201 (metal material tensile test piece) No. 13A shape by an electric discharge machine for conducting a tensile test. Moreover, it was cut into a 10 mm width and 200 mm length size for measuring the specific resistance by the four-terminal method. Results are shown in Table 6.

Furthermore, a paste-like active material was prepared by adding 1% by weight of carboxy methyl cellulose (CMC), 3% by weight of polytetrafluoroethylene (PTFE) and 30% by weight of pure water to a powdery mixture comprising 92% by weight of nickel hydroxide powders and 8% by weight of cobalt monoxide powders and kneading. The composite sheets according to the present invention 4 to 6 were impregnated with the active material, dried at 100°C for 3 hours, and rolled by 30% with a roll. The cross-section of the composite sheets according to the present invention 4 to 6 after rolling was observed with an optical microscope for the observation on whether or not peel-off of the spongy baked metal layer and the baked metal dense reinforcing layer is generated. Results are shown in Table 6. Conventional Example 3

The foaming slurry shown in Table 5 of Embodiment 2 was applied on both sides of an Ni thin sheet with a 60 µm thickness, having punching holes by the doctor blade method so as to produce a conventional composite sheet 3 with a spongy baked metal layer formed on both sides of the Ni thin sheet provided with punching holes in the condition the same as the embodiment 2. The obtained conventional composite sheet 3 was measured and observed similarly as the embodiment 2. Results are shown in Table 6.

### Conventional Example 4

With the foaming slurry shown in Table 5 of Embodiment 2, a spongy baked metal sheet without a dense reinforcing method was produced by the doctor blade method. The obtained sheet was measured and observed similarly as the embodiment 2. Results are shown in Table 6.

### Table 6

From the results shown in Table 6, it was learned that any of the composite sheets according to the present invention 4 to 6 can be used as a material for producing a filter for the high temperature use, a filter for an air cleaner, and an electrode substrate of an alkaline secondary battery. However, since cracks were generated in the spongy baked metal layer of the conventional composite sheet 3, it cannot be used as a material for producing a filter for the high temperature use, a filter for an air cleaner, and an electrode substrate of an alkaline secondary battery. Moreover, since the spongy baked metal sheet of the conventional example 4 has a low strength, it cannot be used as a filter for the high temperature use or a filter for an air cleaner. Furthermore, since it has a large specific resistance, a good result was not obtained as an electrode substrate of an alkaline secondary battery.

### Embodiment 3

A thinner was prepared with a composition ratio shown in Table 7. Then, a filler is added thereto and kneaded in a sealed container for 8 hours to produce a slurry. It was formed by a conventional doctor blade method, and dried by natural seasoning. It was slit with a 4 mm width so as to produce a longitudinal dense reinforcing green tape with a 0.1 mm thickness and 4 mm width size, having a 0% porosity.

### Table 7

Then, with the composition ratio shown in Table 8, a filler and thinner were kneaded for 24 hours. Then, a surfactant was added thereto and kneaded in a reduced pressure for 15 minutes. A foaming agent was added thereto and kneaded in the atmospheric pressure for 5 minutes so as to prepare a foaming slurry.

### Table 8

The above-mentioned dense reinforcing green tape was supplied on the carrier sheet with a 6 cm interval as shown in FIG. 5. The foaming slurry was formed like a sheet onto the above-mentioned carrier sheet with the dense reinforcing green tape placed thereon by the doctor blade method in a 0.4 mm blade gap and 0.4 mm/minute feeding speed condition. It was foamed like a sponge by utilizing the vapor pressure of a volatile organic solvent and the foamability of the surfactant contained in the foaming slurry in a 40°C temperature, 90% humidity and 20 minutes maintenance condition. It was dried in a hot air drying at 80°C temperature and 15 minutes maintenance condition so as to produce a composite green sheet comprising a dense reinforcing green tape and a spongy green layer on one side.

While passing the composite green sheet through a degreasing furnace (not illustrated), it was degreased in a 600°C air temperature and 30 minutes maintenance condition in the air.

Then, it was sintered in an N₂-5%H₂ atmosphere in a 1100°C and 30 minutes maintenance condition while passing it through a sintering furnace (not illustrated) so as to produce a composite sheet according to the present invention 7, comprising a baked metal dense reinforcing layer. The composite sheet according to the present invention 7 was cut into the JIS Z2201 (metal material tensile test piece) No. 13A shape by an electric discharge machine so as to produce a tensile test piece having a baked metal dense reinforcing layer and a tensile test piece not having a baked metal dense reinforcing layer. With the tensile test pieces, a tensile test was conducted. Results are shown in Table 9.

### Table 9

From the results shown in Table 9, it was learned that the tensile strength of a spongy porous metal sheet can be improved dramatically by providing a baked metal dense reinforcing layer.

### Embodiment 4

The composite sheet according to the present invention obtained in Embodiment 3 was cut by an electric discharge machine so as to produce an electrode substrate of an alkaline secondary battery of the present invention comprising a baked metal dense reinforcing layer with a configuration shown in FIG. 9. The obtained electrode substrate of the alkaline secondary battery according to the present invention was filled with an active material mainly containing nickel hydroxide. Then, it was pressed by rolling with a 50% draft. The average active material filling density of the entirety including the baked metal dense reinforcing layer was measured. Results are shown in Table 10.

Furthermore, for the comparison, with the foaming slurry shown in Table 8 and a device shown in FIG. 12, a spongy green sheet was produced in the condition the same as Embodiment 3. By degreasing the spongy green sheet in the condition the same as Embodiment 3, and drying the same in the condition the same as Embodiment 3, a spongy porous metal sheet was produced. The spongy porous metal sheet was joined with a nickel tape by resistance welding. The spongy porous metal sheet joined with the nickel tape was cut with an electric discharge machine so as to produce a conventional electrode substrate of an alkaline secondary battery. The obtained conventional electrode substrate of an alkaline secondary battery was filled with an active material mainly containing nickel hydroxide. Then, it was pressed by rolling with a 50% draft. The average active material filling density of the entirety including the nickel tape was measured. Results are shown in Table 10.

### Table 10

As apparent from the results shown in Table 10, it was learned that an electrode substrate of an alkaline secondary battery according to the present invention, produced with a spongy porous metal sheet prepared by the method according to the present invention can have an average active material filling density 4% thicker than that of the conventional electrode substrate of an alkaline secondary battery.

### Embodiment 5

Dense reinforcing layer forming slurries A to E with the compositions shown in Table 11 and foaming slurries A to E with the compositions shown in Table 12 were produced.

### Table 11

### Table 12

A dense reinforcing layer forming slurry A shown in Table 11 was stored in the hopper 12. Furthermore, a foaming slurry A shown in Table 12 was stored in the hopper 12. The dense reinforcing layer forming slurry A was extended on the carrier sheet 6 of FIG. 6 with a 0.2 mm blade gap so as to form a dense reinforcing slurry layer 24. By passing the slurry layer through the high temperature high humidity vessel 9' for drying at 30°C for 2 minutes, the surface was lightly dried. It was supplied beneath the hopper 12 storing the foaming slurry A shown in Table 12 for applying the foaming slurry A with a 0.5 mm blade gap so as to produce a laminated slurry. The laminated slurry was supplied to the high temperature high humidity vessel 9 of FIG. 6 for foaming in a 40°C temperature, 90% humidity and 20 minutes maintenance condition. Then, it was dried with hot air in a 80°C temperature and 15 minutes maintenance condition so as to produce a composite green sheet comprising a dense reinforcing green layer and a spongy green layer.

While passing the composite green sheet through a degreasing furnace (not illustrated), it was degreased in the condition shown in Table 13. Then, it was sintered in the condition shown in Table 13 while passing it through a sintering furnace (not illustrated) so as to produce a composite sheet according to the present invention B, comprising a spongy baked metal layer and a baked metal dense reinforcing layer shown in Table 14.

On the composite sheet according to the present invention 8 accordingly obtained, as in the embodiment 1, the porosity of the spongy baked metal layer and the baked metal dense reinforcing layer, the thickness ratio thereof, whether or not curvature is generated, and whether or not cracks are generated in the spongy baked metal layer were observed. Results are shown in Table 14.

Similarly to the dense reinforcing layer forming slurry A and the foaming slurry A of Table 12, composite green sheets were produced for the cases of a dense reinforcing layer forming slurry B of Table 11 and a foaming slurry B of Table 12, a dense reinforcing layer forming slurry C of Table 11 and a foaming slurry C of Table 12, a dense reinforcing layer forming slurry D of Table 11 and a foaming slurry D of Table 12, and a dense reinforcing layer forming slurry E of Table 11 and a foaming slurry E of Table 12. By degreasing the composite green sheets while passing through a degreasing furnace (not illustrated) in a condition shown in Table 13. Then, by passing through a sintering furnace (not illustrated), they were baked in a condition shown in Table 13 so as to produce composite sheets according to the present invention 9 to 12 comprising a spongy baked metal layer and a baked metal dense reinforcing layer shown in Table 14.

On the composite sheets according to the present invention 9 to 12 accordingly obtained, as in the embodiment 1, whether or not curvature is generated, and whether or not cracks are generated in the spongy baked metal layer were observed. Results are shown in Table 14.

### Table 13

### Table 14

From the results shown in Table 14, it was learned that since the composite sheets according to the present invention 9 to 12 do not curve, an furthermore, do not generate cracks in the spongy baked metal layer, they can be used as a material for producing a filter for the high temperature use and a filter for an air cleaner.

As heretofore mentioned, according to the present invention, a high strength spongy baked metal composite sheet comprising a baked metal dense reinforcing layer for strengthening on one side or in the inside of a spongy baked metal layer with a high porosity can be produced. The high strength spongy baked metal composite sheet can be used as a material for producing various kinds of filters and an electrode substrate of an alkaline secondary battery. Since an electrode substrate of an alkaline secondary battery obtained by using the high strength spongy baked metal composite sheet have an increased active material average filling density with respect to conventional ones, and a low resistance so as to improve the collecting efficiency, the present invention can contribute significantly to the development of the alkaline secondary battery industry.

**(Table 1)**

| | |
|---|---|
| filler | 54,7% by weight of Ni powder having an average particle size of 5µm |
| thinner | 4,6% by weight of hydroxy propyl methyl cellulose |
| | 4,5% by weight of glycerol |
| | 36,2% by weight of water |

**(Table 2)**

| | |
|---|---|
| filler | 54,7% by weight of Ni powder having an average particle size of 3 µm |
| thinner | 3,7% by weight of hydroxy propylmethyl cellulose |
| | 3,6% by weight of glycol |
| | 29,2% by weight of water |
| surfactant | 7,3% by weight of sodium dodecyl benzene sulfonate |
| foaming agent | 1,5% by weight of hexane |

**(Table 3)**

| composite sheet | | sintering condiction | | porosity of the spongy baked metal layer (% by volume) | porosity of the baked metal lense reinforcing layer (% by volume) | thickness ratio of the baked metal dense reinforcing layer with respect to the composite sheet (%) | tensile strength (kgf/mm²) | specific resistance x 10⁻⁶ (Ωm) | whether or not curvature is generated | whether or not cracks are generated | whether or not peel-off is generated after rolling present invention |
|---|---|---|---|---|---|---|---|---|---|---|---|
| | | tempe- rature (°C) | time (min) | | | | | | | | |
| present invention | 1 | 1050 | 100 | 97 | 4 | 2. 5 | 2. 9 | 1.2 | no | no | no |
| | 2 | 1050 | 4 | 97 | 30 | 2.5 | 2.5 | 1.7 | no | no | no |
| | 3 | 1050 | 2 | 97 | 55 | 2.5 | 1.8 | 3.0 | no | no | no |
| conventional example | 1 | 1050 | 4 | 97 | - | 2.5 | cannot be measured due to cracks | | yes | yes | yes |
| | 2 | 1050 | 4 | 97 | - | - | 0. 0 7 | 1 0 . 5 | no | no | - |

**(Table 4)**

| | |
|---|---|
| filler | 54,7% by weight of Ni powder having an average particle size of 7µm |
| thinner | 3,8% by weight of hydroxy propyl methyl cellulose |
| | 3,7% by weight of glycerol |
| | 30,2% by weight of water |
| surfactant | 7,6% by weight of sodium dodecyl benzene sulfonate |

**(Table 5)**

| | |
|---|---|
| filler | 54,7% by weight of Ni powders having a 7 µm average practicle size |
| thinner | 3,7% by weight of hydroxy propyl methyl cellulose |
| | 3,6% by weight of glycerol |
| | 29,2% by weight of water |
| surfactant | 7,3% by weight of sodium dodecyl benzene sulfonate foaming agent |
| foaming agent | 1,5% by weight of hexane |

**(Table 6)**

| composite sheet | | blade gap of the spongy baked metal layer (% by volume) | blade gap of the baked metal dense reinforcing layer (mm) | porosity of the spongy baked metal layer (% by volume) | porosity of the baked metal dense reinforcing layer (% by volume) | thickness ratio of the baked metal dense reinforcing layer with respect to the composite sheet (%) | tensile strength (kgf/mm²) | specific resistance x 10⁻⁶ (Ω m) | whether or not curvature is generated | whether or not cracks are generated | whether or not peel-off is generated |
|---|---|---|---|---|---|---|---|---|---|---|---|
| present invention | 4 | 0.4 | 0.05 | 97 | 32 | 1.2 | 2.5 | 1.7 | no | no | no |
| | 5 | 0.4 | 0.1 | 97 | 32 | 1.2 | 2.9 | 1.2 | no | no | no |
| | 6 | 0.4 | 0.15 | 97 | 32 | 1.2 | 3.1 | 0.9 | no | no | no |
| con ven tional exam ple | 3 | 0.4 | - | 97 | - | 1.2 | cannot be measured due to cracks | | no | yes | yes |
| | 4 | 0.4 | - | 97 | - | - | 0.08 | 9.5 | no | no | - |

**(Table 7)**

| | |
|---|---|
| filler | 50,0% by weight of Ni powders having a 2 µm average particle size |
| thinner | 4,0% by weight of polyvinyl butylat |
| | 4,0% by weight of dibutyl phthalate |
| | 12,0% by weight of toluene |
| | 30,0% by weight of ethanol |

**(Table 8)**

| | |
|---|---|
| filler | 54,7% by weight of Ni powders having a 2 µm , average particle size |
| thinner | 3,7% by weight of hydroxy propyl methyl cellulose |
| | 3,6% by weight of glycerol |
| | 29,2% by weight of water |
| surfactant | 7,3% by weight of sodium dodecyl benzene sulfonate |
| foaming agent | 1,5% by weight of hexane |

**(Table 9)**

| kind | tensile strength (kg/mm²) |
|---|---|
| tensile test piece having a baked metal dense reinforcing layer on one side | 2,07 |
| tensile test piece having a baked metal dense reinforcing layer in the inside | 2,07 |
| tensile test piece not having a baked metal dense reinforcing layer | 0,12 |

**(TabLe 10)**

| kind | average active material filling density of the entirety (g/cm²) |
|---|---|
| electrode substrate of an alka-line secondary battery according to the present invention | 2,01 |
| conventional electrode sub-strate of an alkaline secondary | 1,93 |

**(Table 11)**

| dense reinforcing layer forming slurry | composition ratio of the dense reinforcing layer forming slurry (% by weight) | | | | |
|---|---|---|---|---|---|
| | material powders | | hydroxy propyl methyl cellulose | glycerol | water |
| | kind of the material powders | | | | |
| A | Ni alloy with a 9µm average particle size (equivalent with INCONEL 600) powders | 42.4 | 3.8 | 3.8 | remainder |
| B | Cu powders with a 10µm average particle size. | 66. 0 | 2.9 | 2.9 | remainder |
| C | Cu alloy with a 9µm average particle size (Cu-10% Ni) powders | 47. 3 | 3.8 | 3.8 | remainder |
| D | Fe powders with a 10µm average particle size | 56.2 | 3.6 | 3.6 | remainder |
| E | SUS310 powders with a 9µm average particle size | 56.2 | 3.6 | 3.6 | remainder |

**(Table 12)**

| foaming slurry | composition ratio of the foaming slurry (% by weight) | | | | | | |
|---|---|---|---|---|---|---|---|
| | material powders | | hydroxy-propyl methyl cellulose | glycerol | surfactant | hexane | water |
| | kind of the material powders | | | | | | |
| A | Ni alloy with a 9 µm average particle size (equivalent with INCONEL 600) powders | 45,0 | 4,0 | 4,0 | 4,0 | 1,8 | remainder |
| B | Cu powders with a 10 µm average particle size | 68,0 | 3,0 | 3,0 | 2,0 | 1,0 | remainder |
| C | Cu alloy with a 9 µm average particle size (Cu-10% Ni) powders | 50,0 | 4,0 | 4,0 | 4,0 | 1,5 | remainder |
| D | Fe powders with a 10 µm average particle size | 60,0 | 3,8 | 3,8 | 4,5 | 1,8 | remainder |
| E | SUS310 powders with a 9 µm average particle size | 60,0 | 3,8 | 3,8 | 4,5 | 1,8 | remainder |

**(Table 13)**

| composite sheet | | degreasing condition | | | sintering condition | | |
|---|---|---|---|---|---|---|---|
| | | atmosphere | temperature (°C) | time (minute) | atmosphere | temperature (°C) | time (minute) |
| present invention | 8 | vacuum | 700 | 60 | vacuum | 1050 | 15 |
| | 9 | air | 600 | 20 | 5%H₂*-*N₂ | 1050 | 15 |
| | 10 | air | 600 | 20 | 5%H₂ -N₂ | 1050 | 15 |
| | 11 | vacuum | 700 | 60 | 5 % H₂ -N₂ | 1050 | 15 |
| | 12 | vacuum | 700 | 60 | vacuum | 1054 | 15 |

**(Table 14)**

| composite sheet | | porosity of the spongy baked metal layer (% by volume) | porosity of the baked metal dense reinforcing layer (% by volume) | thickness ratio of the baked metal dense reinforcing layer with respect to the composite sheet (%) | whether or not curvature is generated | whether or not cracks are generated |
|---|---|---|---|---|---|---|
| present invention | 8 | 97 | 20 | 12 | no | no |
| | 9 | 90 | 0 | 5 | no | no |
| | 10 | 96 | 2 | 5 | no | no |
| | 11 | 95 | 4 | 6 | no | no |
| | 12 | 95 | 10 | 8 | no | no |

## Claims

1. A high strength composite sheet comprising a spongy sintered metal powder layer having continuous holes opened on the surface and skeleton parts of a baked sintered metal, with a high porosity, and a sintered metal powder dense reinforcing layer having a 4 to 55% by volume porosity, smaller than the porosity of the spongy sintered metal powder layer, laminated thereon, wherein the sintered metal powder dense reinforcing layer is laminated on one side surface of the spongy sintered metal powder layer having continuous holes with a high porosity.

2. The high strength composite sheet according to claim 1, wherein the sintered metal powder dense reinforcing layer has a 0.5 to 30% thickness with respect to the entire high strength composite sheet.

3. The high strength composite sheet according to claim 1 or 2, wherein the sintered metal powder dense reinforcing layer, is accommodated in the spongy sintered metal powder layer having continuous holes with a high porosity.

4. The high strength composite sheet according to any of claims 1 to 3, wherein the sintered metal powder dense reinforcing layer has homogeneously distributed three-dimensionally amorphous holes, to be observed by an electron microscope with a 1,000 times magnification.

5. The high strength composite sheet according to any of the previous claims, wherein the spongy sintered metal powder layer having continuous holes with a high porosity has a 70 to 99% by volume porosity.

6. The high strength composite sheet according to claim 5, wherein the spongy sintered metal powder layer has a 100 to 700 µm average hole size.

7. The high strength composite sheet according to claim 6, wherein the spongy sintered metal powder layer has a skeleton part having skeleton fine holes with a 0.5 to 2.0 µm average hole size and a 10 to 55% by volume porosity.

8. The high strength composite sheet according to any of the previous claims, wherein the spongy sintered metal powder layer and the sintered metal powder dense reinforcing layer comprise a sintered metal powder prepared by sintering Ni powders or Ni group alloy powders.

9. An electrode substrate of an alkaline secondary battery produced by using the high strength spongy sintered metal powder composite sheet according to claim 8.

10. The high strength composite sheet according to any of claims 1 to 7, wherein the spongy sintered metal powder layer and the sintered metal powder dense reinforcing layer comprise a sintered metal powder prepared by sintering Ni powders or Ni group alloy powders, Cu powders or Cu group alloy powders, Fe powders or Fe group alloy powders.

11. A filter produced by using the high strength spongy sintered metal powder composite sheet according to claim 10.

12. Method for the production of a high strength composite sheet comprising a spongy sintered metal powder layer having continuous holes open on the surface and skeleton parts with a high porosity, and a sintered metal powder dense reinforcing layer having a 4 to 55% by volume porosity smaller than the porosity of the spongy sintered metal powder layer, laminated thereon, comprising a step of forming a green layer to be a sintered metal powder dense reinforcing layer (hereinafter referred to as a dense reinforced green layer) by extending a slurry comprising a mixture of material powders and a thinner or a mixture comprising material powders, a thinner and a surfactant on a carrier sheet by the doctor blade method, heating and drying,
a step of forming a green layer to be a spongy sintered metal powder layer (hereinafter referred to as a spongy green layer) on the dense reinforced green layer by extending a slurry prepared by mixing material powders, a thinner, a surfactant and a foaming agent (hereinafter referred to as a foaming slurry) on the dense reinforcing green layer by the doctor blade method, heating and drying so as to produce a composite green sheet comprising the dense reinforcing green layer and the spongy green layer, and
a step of degreasing and sintering the composite green sheet.

13. The method of claim 12, comprising a step of further extending the foaming slurry on the surface of the dense reinforcing green layer side of the composite green sheet by the doctor blade method, drying so as to produce a composite green sheet with the spongy green layer formed on both sides of the dense reinforcing green layer, degreasing and sintering the composite green sheet.

14. The method according to claim 12, comprising a step of further super-imposing a preliminarily produced spongy green layer onto the surface of the dense reinforcing green layer side of the composite green sheet, so as to produce a composite green sheet with the spongy green layer formed on both sides of the dense reinforcing green layer, degreasing and sintering the composite green sheet.

## Patentansprüche

1. Hochfeste Verbundplatte, umfassend eine schwammartig gesinterte Metallpulverschicht, aufweisend durchgehende auf der Oberfläche offene Löcher und Skelettteile aus gebacken gesintertem Metall, mit einer hohen Porosität, und eine dichte gesintertes-Metallpulver-Verstärkungsschicht, aufweisend eine Volumenporosität von 4 bis 55 %, geringer als die Porosität der schwammartig gesinterten Metallpulverschicht, die darauf geschichtet ist, wobei die dichte gesintertes-Metallpulver-Verstärkungsschicht auf einer Seitenoberfläche der schwammartig gesinterten Metallpulverschicht, aufweisend durchgehende Löcher, mit einer hohen Porosität aufgeschichtet ist.

2. Hochfeste Verbundplatte gemäß Anspruch 1, worin die dichte gesintertes-Metallpulver-Verstärkungsschicht eine Dicke von 0,5 bis 30% bezogen auf die gesamte hochfeste Verbundplatte aufweist.

3. Hochfeste Verbundplatte gemäß Anspruch 1 oder 2, worin die dichte gesintertes-Metallpulver-Verstärkungsschicht in der schwammartig gesinterten Metallpulverschicht, aufweisend durchgehende Löcher, mit einer hohen Porosität aufgenommen ist.

4. Hochfeste Verbundplatte gemäß einem der Ansprüche 1 bis 3, worin die dichte gesintertes-Metallpulver-Verstärkungsschicht homogen verteilte, dreidimensional amorphe Löcher, die mit einem Elektronenmikroskop unter 1000-facher Vergrößerung zu beobachten sind, aufweist.

5. Hochfeste Verbundplatte gemäß einem der vorhergehenden Ansprüche, worin die schwammartig gesinterte Metallpulverschicht, aufweisend durchgehende Löcher, mit einer hohen Porosität eine Volumenporosität von 70 bis 99% aufweist.

6. Hochfeste Verbundplatte gemäß Anspruch 5, worin die schwammartig gesinterte Metallpulverschicht eine mittlere Lochgröße von 100 bis 700 µm aufweist.

7. Hochfeste Verbundplatte gemäß Anspruch 6, worin die schwammartig gesinterte Metallpulverschicht ein Skelettteil mit Skelettfeinlöchern mit einer mittleren Lochgröße von 0,5 bis 2,0 µm und einer Volumenporosität von 10 bis 55% aufweist.

8. Hochfeste Verbundplatte gemäß einem der vorhergehenden Ansprüche, worin die schwammartig gesinterte Metallpulverschicht und die dichte gesintertes-Metallpulver-Verstärkungsschicht ein gesintertes Metallpulver aufweisen, das durch Sintern von Ni-Pulvern oder Legierungspulvern der Ni-Gruppe hergestellt ist.

9. Elektrodensubstrat einer alkalischen Sekundärbatterie, das unter Verwendung der hochfesten schwammartig gesinterten Metallpulver-Verbundplatte hergestellt ist.

10. Hochfeste Verbundplatte gemäß einem der Ansprüche 1 bis 7, worin die schwammartig gesinterte Metallpulverschicht und die dichte gesintertes-Metallpulver-Verstärkungsschicht ein gesintertes Metallpulver aufweisen, das durch Sintern von Ni-Pulvern oder Legierungspulvern der Ni-Gruppe, von Cu-Pulvern oder Legierungspulvern der Cu-Gruppe, von Fe-Pulvern oder Legierungspulvern der Fe-Gruppe hergestellt ist.

11. Filter, der unter Verwendung der hochfesten schwammartig gesinterten Metallpulver-Verbundplatte gemäß Anspruch 10 hergestellt ist.

12. Verfahren zur Herstellung einer hochfesten Verbundplatte, umfassend eine schwammartig gesinterte Metallpulverschicht, aufweisend durchgehende auf der Oberfläche offene Löcher und Skelettteile mit einer hohen Porosität, und eine dichte gesintertes-Metallpulver-Verstärkungsschicht, aufweisend eine Volumenporosität von 4 bis 55 %, geringer als die Porosität der schwammartig gesinterten Metallpulverschicht, die darauf geschichtet ist, umfassend einen Schritt des Ausbildens einer Grünschicht, die eine dichte gesintertes-Metallpulver-Verstärkungsschicht werden soll (hierin nachfolgend als eine dichte Verstärkungsgrünschicht bezeichnet) durch Ausbreiten einer Aufschlämmung, umfassend eine Mischung aus Materialpulvern und einem Verdünnungsmittel oder eine Mischung, beinhaltend Materialpulver, ein Verdünnungsmittel und ein Surfactant, auf einer Trägerplatte durch das Doctor-Blade-Verfahren, Erwärmen und Trocknen,
einen Schritt des Ausbildens einer Grünschicht, die eine schwammartig gesinterte Metallpulverschicht werden soll (hierin nachfolgend als eine schwammartige Grünschicht bezeichnet) auf der dichten Verstärkungsgrünschicht durch Ausbreiten einer Aufschlämmung, die durch Mischen von Materialpulvern, einem Verdünnungsmittel, einem Surfactant und einem Schaumbildner hergestellt wurde (hierin nachfolgend als eine schäumende Aufschlämmung bezeichnet), auf der dichten Verstärkungsgrünschicht durch das Doctor-Blade-Verfahren, Erwärmen und Trocknen, um so eine Verbundgrünplatte zu erzeugen, die die dichte Verstärkungsgrünschicht und die schwammartige Grünschicht aufweist, und einen Schritt des Entfettens und Sinterns der Verbundgrünplatte.

13. Verfahren gemäß Anspruch 12, umfassend einen Schritt des weiteren Ausbreitens der schäumenden Aufschlämmung auf der Oberfläche der dichten Verstärkungsgrünschichtseite der Verbundgrünplatte durch das Doctor-Blade-Verfahren, Trocknen, um so eine Verbundgrünplatte mit der schwammartigen Grünschicht zu erzeugen, die auf beiden Seiten der dichten Verstärkungsgrünschicht ausgebildet ist, Entfetten und Sintern der Verbundgrünplatte.

14. Verfahren gemäß Anspruch 12, umfassend einen Schritt des Überlagerns einer vorbereitend hergestellten schwammartigen Grünschicht auf der Oberfläche der dichten Verstärkungsgrünschichtseite der Verbundgrünplatte, um so eine Verbundgrünplatte mit der schwammartigen Grünschicht zu erzeugen, die auf beiden Seiten der dichten Verstärkungsgrünschicht ausgebildet ist, Entfetten und Sintern der Verbundgrünplatte.

## Revendications

1. Plaque composite à haute résistance comprenant une couche en poudre d'éponge métallique frittée ayant des trous continus ouverts à la surface et des parties d'ossature en métal fritté et recuit, laquelle présente une haute porosité, et une couche de renforcement dense en poudre métallique fritté ayant une porosité de 4 à 55 Vol% et inférieure à la porosité de la couche en poudre d'éponge métallique frittée, laquelle est laminée sur la première couche, la couche de renforcement dense en poudre métallique fritté étant laminée sur celle surface de la couche en poudre d'éponge métallique frittée ayant des trous continus avec une haute porosité.

2. Plaque composite à haute résistance selon la revendication 1, dans laquelle la couche de renforcement dense en poudre métallique fritté a une épaisseur de 0,5 à 30% par rapport à la plaque composite à haute résistance entière.

3. Plaque composite à haute résistance selon la revendication 1 ou 2, dans laquelle la couche de renforcement dense en poudre métallique fritté est logée dans la couche en poudre d'éponge métallique frittée ayant des trous continus avec une haute porosité.

4. Plaque composite à haute résistance selon l'une quelconque des revendications 1 à 3, dans laquelle la couche de renforcement dense en poudre métallique fritté comprend des trous amorphes et distribués à trois dimensions qu'on peut observer par moyen d'un microscope électronique avec un grossissement de 1000.

5. Plaque composite à haute résistance selon l'une quelconque des revendications précédentes, dans laquelle la couche en poudre d'éponge métallique frittée ayant des trous continus avec une haute porosité a une porosité de 70 à 99 Vol%.

6. Plaque composite à haute résistance selon la revendication 5, dans laquelle la couche en poudre d'éponge métallique frittée présente une taille moyenne de trou de 100 à 700 µm.

7. Plaque composite à haute résistance selon la revendication 6, dans laquelle la couche en poudre d'éponge métallique frittée comprend une partie d'ossature ayant des trous d'ossature fins avec une taille moyenne de trou de 0,5 à 2,0 µm et une porosité de 10 à 55 Vol%.

8. Plaque composite à haute résistance selon l'une quelconque des revendications précédentes, dans laquelle la couche en poudre d'éponge métallique frittée et la couche de renforcement dense en poudre métallique fritté comprennent un poudre métallique fritté préparé par frittage des poudres de Ni ou des poudres d'alliage du groupe Ni.

9. Substrat d'électrode d'une batterie alcaline secondaire fabriqué en utilisant la plaque composite à haute résistance comprenant une couche en poudre d'éponge métallique frittée selon la revendication 8.

10. Plaque composite à haute résistance selon l'une quelconque des revendications 1 à 7, dans laquelle la couche en poudre d'éponge métallique frittée et la couche de renforcement dense en poudre métallique fritté comprennent un poudre métallique fritté préparé par frittage des poudres de Ni ou des poudres d'alliage du groupe Ni, des poudres de Cu ou des poudres d'alliage du groupe Cu, des poudres de Fe ou des poudres d'alliage du groupe Fe.

11. Filtre fabriqué en utilisant la plaque composite à haute résistance comprenant une couche en poudre d'éponge métallique frittée selon la revendication 10.

12. Procédé de fabrication d'une plaque composite à haute résistance comprenant une couche en poudre d'éponge métallique frittée ayant des trous continus ouverts à la surface et des parties d'ossature, laquelle présente une haute porosité, et une couche de renforcement dense en poudre métallique fritté ayant une porosité de 4 à 55 Vol% et ainsi inférieure à la porosité de la couche en poudre d'éponge métallique frittée, laquelle est laminée sur la première couche, comprenant une étape de former une couche verte destinée à former une couche de renforcement dense en poudre métallique fritté (appelée couche verte densement renforcée ci-après) en appliquant un coulis comprenant un mélange de poudres de matière et un agent de dilution ou un mélange comprenant des poudres de matière, un agent de dilution et un agent de surface sur une plaque de support par moyen du couchage à la lame, du chauffage et du séchage,
une étape de former une couche verte destinée à former une couche en poudre d'éponge métallique frittée (appelée couche verte d'éponge ci-après) sur la couche verte densement renforcée en appliquant un coulis préparé par mélange des poudres de matière, d'un agent de dilution et d'un agent moussant (appelé coulis moussant ci-après) sur la couche verte de renforcement dense par moyen du couchage à la lame, du chauffage et du séchage pour produire une plaque composite verte comprenant la couche verte de renforcement dense et la couche verte d'éponge, et
une étape de dégraissage et de frittage de la plaque composite verte.

13. Procédé selon la revendication 12, comprenant une étape d'application du coulis moussant sur la surface comprenant la couche verte de renforcement dense de la plaque composite verte par couchage à la lame, séchage pour produire une plaque composite verte dans laquelle la couche verte d'éponge est formée des deux côtés de la couche verte de renforcement dense, dégraissage et frittage de la plaque composite verte.

14. Procédé selon la revendication 12, comprenant une étape de superposition d'une couche verte d'éponge préparée précédemment sur la surface comprenant la couche verte de renforcement dense de la plaque composite verte pour produire une plaque composite verte dans laquelle la couche verte d'éponge est formée des deux côtés de la couche verte de renforcement dense, de dégraissage et de frittage de la plaque composite verte.
